(19)

Europäisches
Patentamt
European
Patent Office
Office européen
des brevets

(11)  **EP 3 565 971 B1**

(12)  # EUROPEAN PATENT SPECIFICATION

(45) Date of publication and mention
of the grant of the patent:
**14.12.2022  Bulletin 2022/50**

(21) Application number: **17838060.6**

(22) Date of filing: **15.11.2017**

(51) International Patent Classification (IPC):
**F03H 99/00** *(2009.01)*     **F02C 6/00** *(2006.01)*

(52) Cooperative Patent Classification (CPC):
**F03H 99/00; F02C 6/00**

(86) International application number:
**PCT/IB2017/001398**

(87) International publication number:
**WO 2018/091962 (24.05.2018 Gazette 2018/21)**

(54) **METHOD AND A SYSTEM FOR GENERATING FUEL EFFICIENT FORCE BY ACCELERATING OBJECT AND USING CENTRIFUGAL FORCE**

VERFAHREN UND SYSTEM ZUR ERZEUGUNG EINER KRAFTSTOFFEFFIZIENTER KRAFT DURCH BESCHLEUNIGUNG VON OBJEKTEN UND VERWENDUNG VON ZENTRIFUGALKRAFT

PROCÉDÉ ET SYSTÈME DE GÉNÉRATION DE FORCE EFFICACE DE CARBURANT PAR ACCÉLÉRATION D'UN OBJET ET UTILISATION D'UNE FORCE CENTRIFUGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.11.2016  IR 1395301020**

(43) Date of publication of application:
**13.11.2019  Bulletin 2019/46**

(73) Proprietor: **Bahmani, Mohsen**
**14057 Berlin (DE)**

(72) Inventor: **Vafaey, Hossain**
**Tehran, 19176-86111 (IR)**

(74) Representative: **Patentanwälte Bressel und Partner mbB**
**Potsdamer Platz 10**
**10785 Berlin (DE)**

(56) References cited:
**WO-A2-2011/158048     US-B2- 8 272 283**

- **"Conservation of momentum", INTERNET CITATION, 2007, page 1, XP002447082, Retrieved from the Internet: URL:http://www.britannica.com/eb/article-9 053290 [retrieved on 2007-09-03]**

- **JOHN R TAYLOR ED - JOHN R TAYLOR: "Newton's First and Second Laws; Inertial Frames", 2005, CLASSICAL MECHA, UNIVERSITY SCIENCE BOOKS, PAGE(S) 13-21, XP007915554, ISBN: 978-1-891389-22-1 the whole document**
- **N/a: "Drogue parachute", Wikipedia, 3 October 2016 (2016-10-03), XP055477900, Retrieved from the Internet: URL:https://en.wikipedia.org/w/index.php?t itle=Drogue_parachute&oldid=742428293 [retrieved on 2018-05-24]**
- **N/a: "Air brake (aeronautics)", Wikipedia, 4 November 2016 (2016-11-04), XP055477901, Retrieved from the Internet: URL:https://en.wikipedia.org/w/index.php?t itle=Air_brake_(aeronautics)&oldid=7478265 70 [retrieved on 2018-05-24]**
- **N/a: "Spoiler (aeronautics)", Wikipedia, 23 October 2016 (2016-10-23), XP055477902, Retrieved from the Internet: URL:https://en.wikipedia.org/w/index.php?t itle=Spoiler_(aeronautics)&oldid=745836205 [retrieved on 2018-05-24]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 565 971 B1

**Description**

**FIELD OF THE INVENTION AND BRIEF DESCRIPTION OF PRIOR ART.**

With the growth of population globally and enhancement of humans life standards, the desire for transportation in all different sectors such as air, sea, cars, trucks, lorry, and etc for the purpose of delivery of goods and services as well as commutations has increased dramatically, and currently the methods used to provide the sufficient energy acquire mainly fossil fuels. Most of the engines used in propelling vehicles have low or medium efficiencies thereby most of the energies released by burning such fossil fuels are wasted to undesired forms such as heat and noise. Also by considering environmental issues the desire to cut fossil fuel consumptions is a necessity.

By considering the rapid growth of population and production of all different forms of vehicles as well as fossil fuel and other energy generating limitations, therefore a very strong aspiration is felt to innovate a method and a system to maximize the fuel efficiency and by doing so reduce the fuel consumption in all sorts of vehicles.

Wright brothers were the first who pioneered the invention of propeller force generating method and system which was also in full compliance of physics and Newtonian laws of motion which eventually lead to the invention of propeller airplanes. Later on Sir Frank Whittle invented jet engines which derived their thrust force by burning fuel and exhausting hot gasses at a very high speed to generate thrust force and is currently used in aviation industry prevalently. It is noticeable that the fuel consumption efficiency in the methods that has been invented and in use so far are low.

Since the invention of jet engines, no other method and system for generating thrust force has been invented so far and mainly the inventions were to complete and improve the jet engine.

This invention is an improvement and completion of my granted USPTO patent (US 8272283 B2) to enhance fuel efficiency for generating thrust force and it comprises new and inventive steps with new claims.

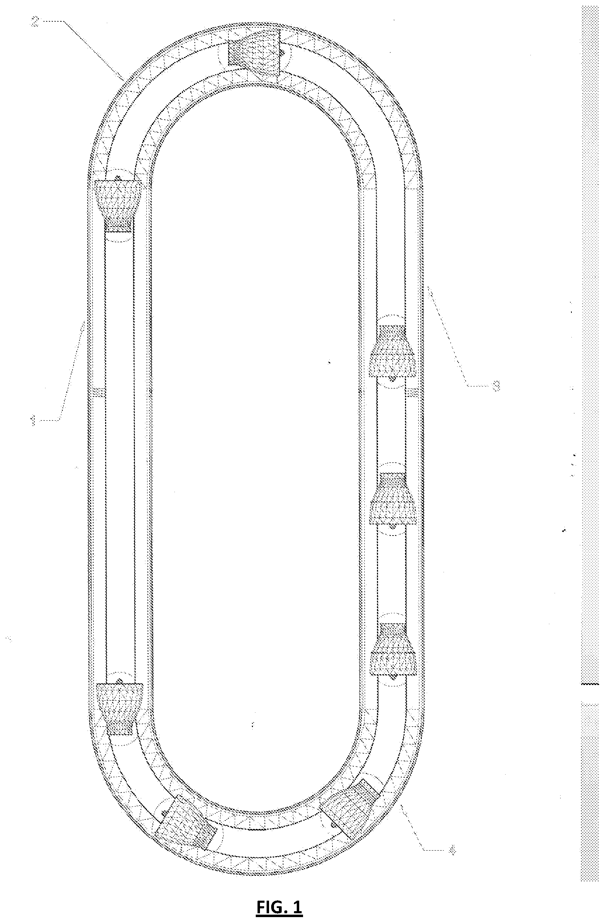

An embodiment of the granted USPTO patent discloses a method for thrust generation comprising looped track that has two straight sides and two curved parts as shown in figure 1, and a number of reaction engine vehicles that travel along the looped track in a programmed manner. In order to eliminate friction between the reaction engine vehicles and the looped track electromagnetic design is utilized in a way so the movement is air cushioned and free of friction. As mentioned, the looped track consists of two straight paths. First straight path as shown in figure 1 part 1, is for the purpose of reaction engine vehicles to accelerate (acceleration achieved is totally independent of the looped track) and reach its top speed before going through the first curved part of the looped track. When the reaction engine vehicle travels through the first curved part of the looped track as shown in figure 1 part 2, it will inevitably experience a force away from the center of the curved path (centrifugal force) and this force is eventually transferred to the looped track. In order to cancel the reaction engine vehicle's effect on the opposite curved path of the looped track to reach a unidirectional force, the second straight path of the looped track which is shown in figure 1 part 3, is used to decelerate the reaction engine vehicles (deceleration is done independent of the looped track). Eventually the reaction engines will pass the second curved path of the looped track which is shown in figure 1 part 4, with a low speed and reach the first straight path of the looped track and the cycle continues. The reaction engines are controlled by sensors and CPU to monitor and program the desired action.

The above paragraph was a brief description of my granted USPTO patent and the descriptions below are the new and inventive steps taken to improve and complete the granted USPTO patent.

It is an objective of the invention to provide a new and different method and apparatus for acceleration of said apparatus or a vehicle attached to it.

The objective is solved by an apparatus according to claim 1 and method according to claim 10. Other embodiments are described in the dependent claims.

**BRIEF DESCRIPTION OF THE DRAWINGS**

Embodiment of the invention will now be described, by ways of example only, with reference to the accompanying schematic drawings in which corresponding reference symbols indicate corresponding parts, and in which:

FIG. 1 is the top view of the mounted apparatus comprising reaction engine and looped track with its components.
FIG. 2 is the perspective view of the apparatus with two looped tracks fixed together back to back and their respective reaction engines.
FIG. 3 is the cross-sectional view of the looped track and reaction engine which illustrates the winding of wires around looped track and magnet of the reaction engine.
FIG. 4 is the perspective view of the reaction engine equipped with parachute system.
FIG. 5 is the perspective view of the reaction engine equipped with parachute system starting to fold open.
FIG. 6 is the perspective view of the reaction engine equipped with parachute system folded open.
FIG. 7 is the top view of the apparatus with sensors attached to the looped track.

FIG. 8 shows the circuitry related to programming of this invention where the sensors that are attached to the looped track are wired to the input pins of this processor and this processor has outputs pins that convey the command to their corresponding reaction engine.

FIG. 9 shows the circuitry for the output pins of the processor for transmitting a unique radio frequency or encoded radio channel to carry the desired command to be executed by the corresponding reaction engine.

FIG. 10 shows the circuitry for the output pins of the processor for transmitting a unique radio frequency or encoded radio channel to carry the desired command to be executed by the corresponding reaction engine.

FIG. 11 shows the circuitry to generate a unique radio frequency or encoded radio channel (as set by the operator) to be transmitted and received by all reaction engines to set a predetermined and uniform force magnitude during the acceleration phase which is the travelling of the reaction engines along the first straight path of the looped track.

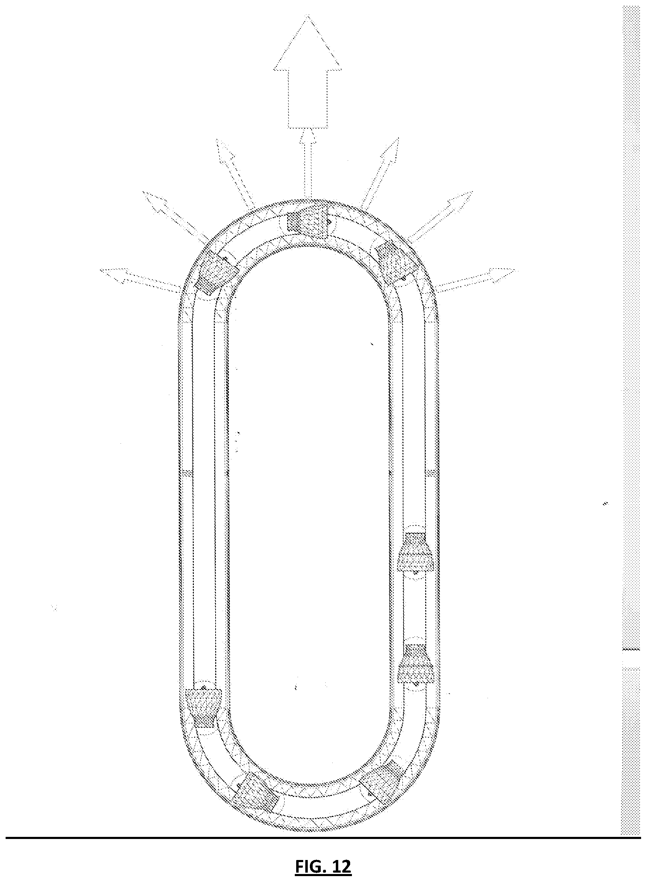

FIG. 12 is the top view of the mounted apparatus comprising reaction engine and looped track with its components and shows the force that has been generated by the looped track in different directions as a result of the reaction engines travelling at high speed along the first curved path of the looped track for which the resultant force generated by the looped track will eventually be a unidirectional force.

## DETAILED DESCRIPTION OF THE INVENTION

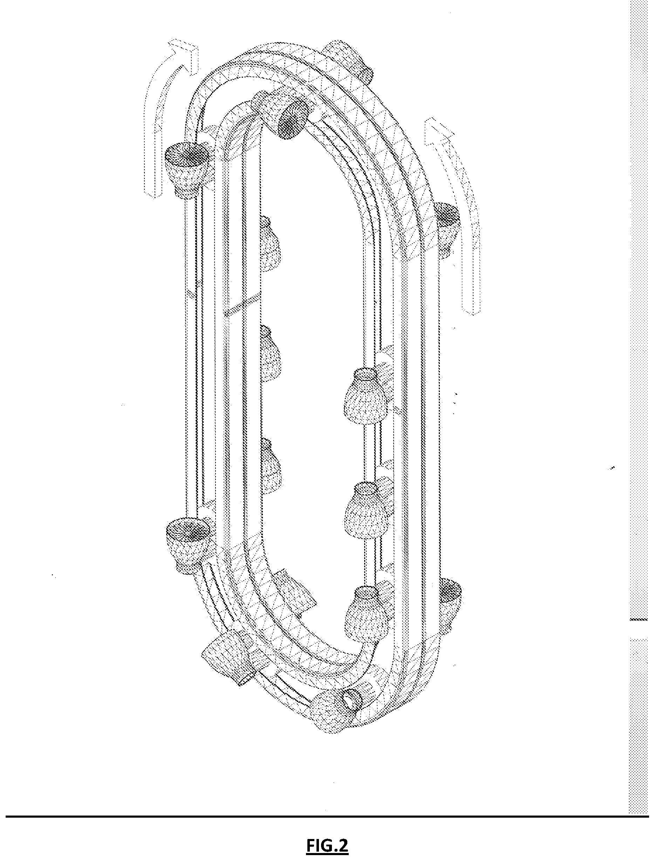

As shown in figure 2, in order to counter balance the above described mechanism and to avoid rattling (undesired shaking or vibrating moves) during continuous operation, two looped tacks are fixed together back to back and the movement of reaction engine vehicles running along these looped tracks must be in opposite directions i.e one in clockwise direction and the other in anticlockwise direction. Both sides must apply centrifugal force to the first curved part of their looped track to achieve a sufficient unidirectional force.

One of the main operational obstacles of this invention would be the friction that can be caused during the movement of the reaction engine vehicles along the looped track. In order to surmount this obstacle the best method would be to utilize electromagnetic forces, repelling the permanent magnets attached to reaction engines that run through the looped track's different path's, in all directions so the permanent magnet of the reaction engine vehicle floats (air cushioned) within the looped track and runs without friction. The electromagnetic forces must not affect the running path of the reaction engine vehicles throughout the looped track. By utilizing such mechanism heat generation as well as sound and other unnecessary energy transformations are eliminated therefore higher efficiency can be achieved. In order to avoid Eddy current it is best to use carbon fiber material for the looped track.

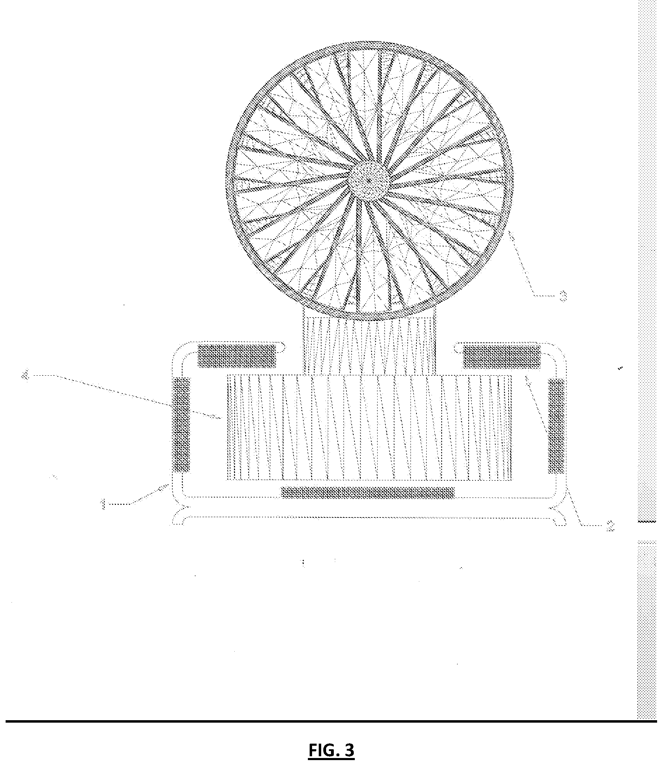

As shown in figure 3 by winding wires through different sections of the looped track (figure 3 part 2) and correct wiring to achieve desired current flow, the permanent magnet attached to the reaction engine vehicle (figure 3 part4) will float (air cushioned) throughout the track path (figure 3 part 1) during run. The number of wire turns and current passing through wires can be calculated by the Lorentz force formula with respect to the magnetic strength of the permanent magnet to achieve the necessary force to balance. When designing such system we must also take into considerations the air gap (distance) between the permanent magnet and the wire coil. Since the magnetic field strength (magnetic flux) is inversely proportional to the cubed of the air gap (distance away from the permanent magnet) so considerations also need to be taken with regards to this issue during design process.

We can utilize any kind of reaction engine for this invention and one of the types is jet engine. In order to manage the fueling of these jet engines we can design an automated pumping system at the second curved path of the looped track where the speed of the jet engines are at their lowest during their afore mentioned cycle and attach automated valves to the jet engine to receive the fuel through a short distance of the second curved path of the looped track, and then detach from the fueling system and continue their cycle.

Another reaction engine that can be utilized is propellant method that uses electric motors to rotate its blades (duct fans used in RC airplanes could be one type). Also the electrical circuits and processors that are embedded inside the reaction engines that control and manage the movement of the reaction engine at different parts of the looped track need to receive electrical current. Another issue would be to provide the electric power required by the reaction engine vehicles by noncontact (wireless) methods. Since the reaction engine vehicles are constantly running along the path of looped track therefore we need a method to supply the necessary electric power required by them without involving complex wiring therefore it is recommended to utilize wireless means to supply the electric power from a power source to each reaction engine vehicle.

According to Faraday's law any change in the magnetic field of a coil of wire will cause an emf to be induced in the coil. This emf induced is called induced emf and if the conductor circuit is closed, the current will also circulate through the circuit and this current is called induced current.

As we know when a current passes through a wire a magnetic field is generated looping around that wire therefore one of the methods to create a change in magnetic field is to use alternating current in a primary coil of wire to create a changing magnetic field environment to meet Faraday's law requirement in order to create an emf in the secondary coil of wire in the proximity of primary coil of wire with alternating current. By this method a current is induced in the secondary coil of wire wirelessly. In order to increase the distance between the primary and secondary coil and still gain effective and viable current induction, the frequency of the alternating current in the primary coil must be set high enough to achieve the desired goal.

In order to incorporate the Faraday's law to this invention we must create an alternating magnetic field along the entire path of the looped track by creating a high frequency alternating current from a DC source such as battery and by inverting the DC current to high frequency AC current and using coil of wire to generate the alternating magnetic field which can be conducted around the entire path of the looped track through by ferromagnetic alloys. Also we must attach a coil of wire to each of the reaction engine vehicles to receive the alternating current induced by the magnetic field, and when received, the alternating current can then be rectified and transformed to DC current and made available for consumption by electric circuits implemented in each reaction engine vehicles. The attached coil of wire to the reaction engine vehicle will remain within vicinity (noncontact) of the ferromagnetic alloy (alternating magnetic field supply source) during travel of the reaction engine vehicle along the path of the looped track.

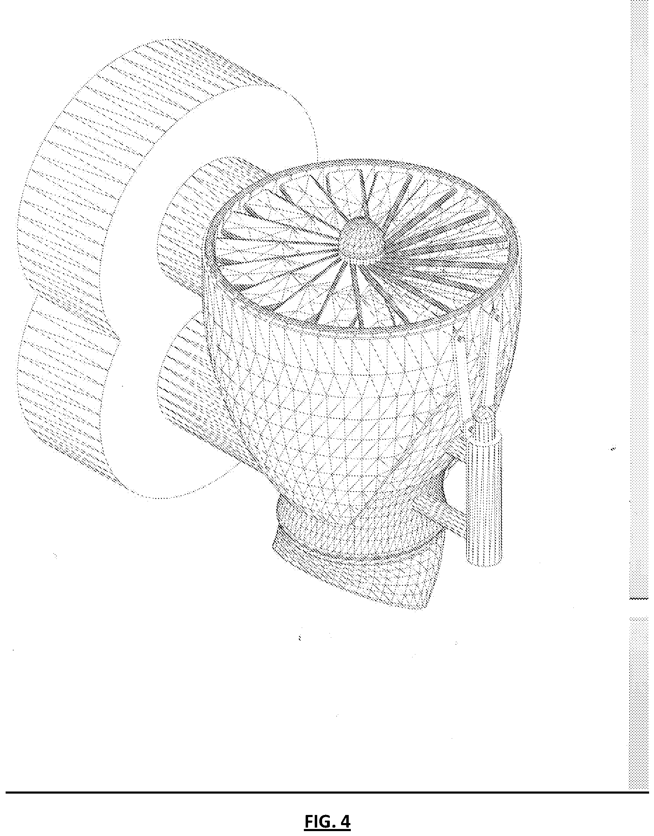

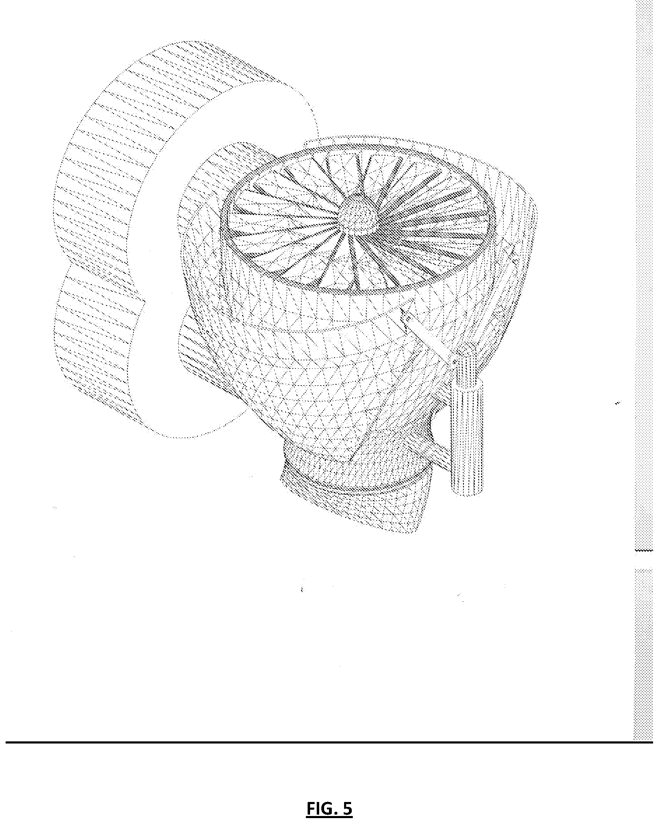

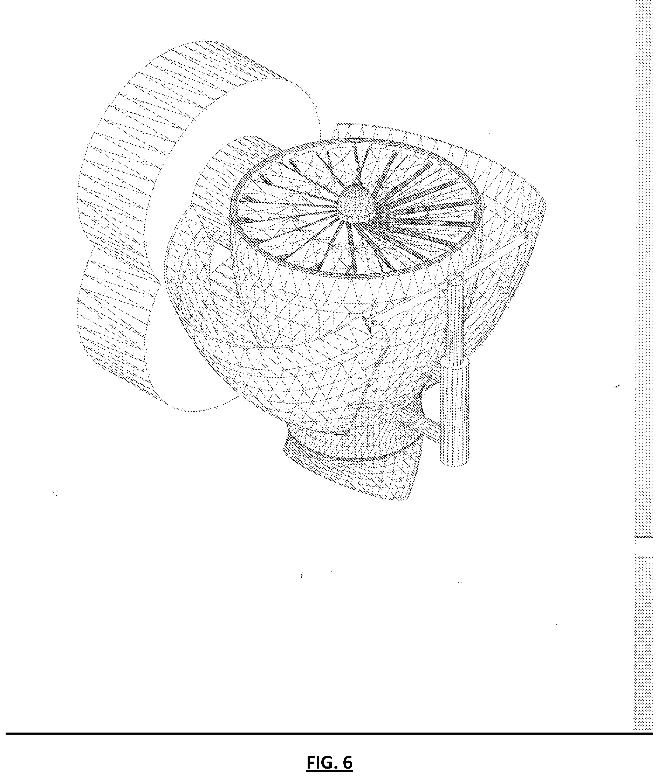

As shown in figures 4, 5, and 6 a parachute system is attached to the reaction engines. Since the reaction engines decelerate at the second straight path of the looped track therefore it is essential to decelerate these reaction engines by means of air drag (to be efficient) and in order to achieve this goal a parachute mechanism is used and by actuating the parachute system to fold open, the cross sectional area of the reaction engine is increased therefore the drag force created will decelerate the reaction engine during its travel at the second straight path of the looped track, and eventually when the reaction engine reaches the end of the second straight path of the looped track its velocity will be at its minimal and the parachute is to be folded back and when the reaction engine reaches the first straight path of the looped track the reaction engine is ready to accelerate again.

Since these reaction engines operate differently at different parts of the looped track for example the reaction engine accelerates at the first straight path of the looped track and decelerates at the second straight path of the looped track by actuating their parachute mechanism, and since the movement of these reaction engines along the looped track are independent of the looped track therefore sensors are needed to be attached to different parts of the looped track to monitor each reaction engine accordingly with respect to its position along the looped track and the information obtained by these sensors are processed by a CPU or processor which is programmed and then the computed function is transmitted to the corresponding reaction engine by means of radio waves and eventually the corresponding reaction engine will execute the command sent by processor.

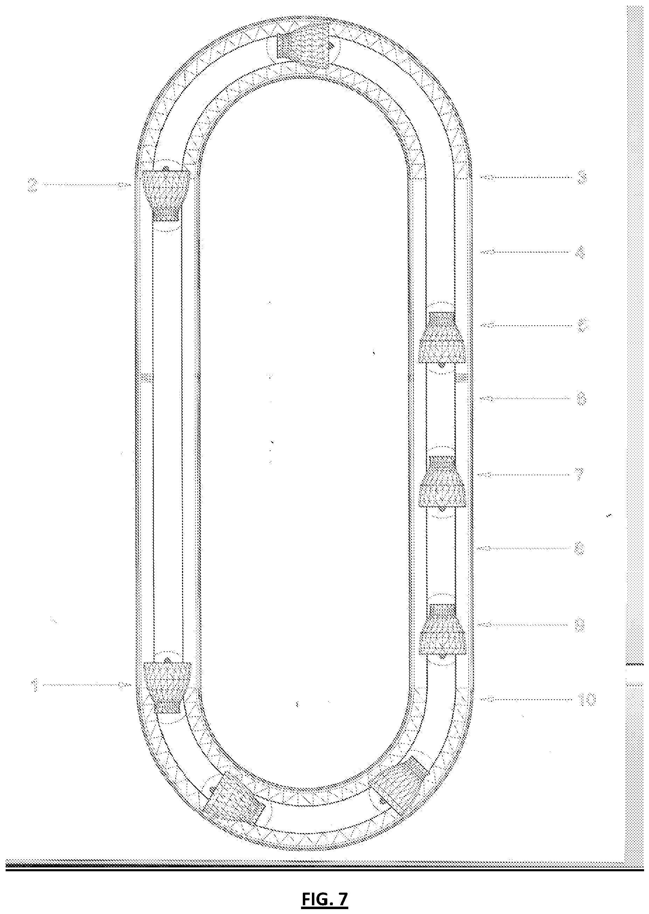

As shown in figure 7 a number of sensors (for example 1 to 10) are attached to the looped track. When the reaction engines align with these sensors during their movement along the looped track, these sensors will become activated and send a signal to the processor or CPU. Eventually the processor receives these signals and performs an operation based on the program that has been written for it and consequently issues a command for the corresponding reaction engine. The executive command is sent to the corresponding reaction engine by means of radio waves. Upon receipt of the command the corresponding reaction engine will execute the received order.

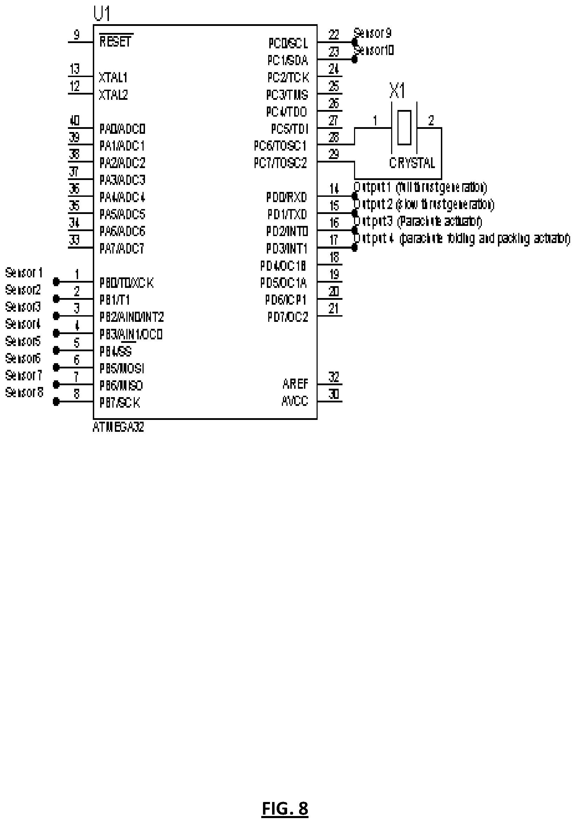

As shown in figure 8 the sensors that are attached to the looped track are wired to the input pins of the processor or CPU. The processor also has a number of output pins. When the processor receives a signal from the sensors attached to the looped track, and after processing and computing, the processor will activate one of the output pins with respect to the calculations and computing that has executed. This activated output pin then generates a predetermined radio frequency or encoded message via a frequency channel for the corresponding reaction engine. Since a number of reaction engines are moving along the looped track and also a number of command orders are needed to control the movement of reaction engines along different parts of the looped track, therefore accordingly sufficient number of output pins are required to send the correct command with respect to the reaction engines position along the looped track to its corresponding reaction engine. To avoid interference either different radiofrequency for each output pin is required or by encoding each output pin and using one frequency channel we can transmit the correct command to each reaction engine separately and securely.

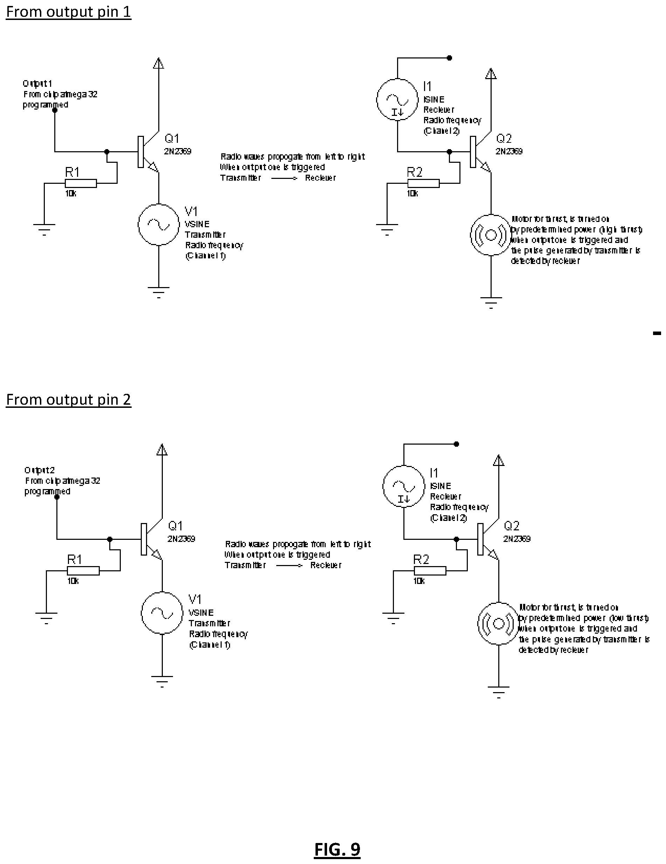

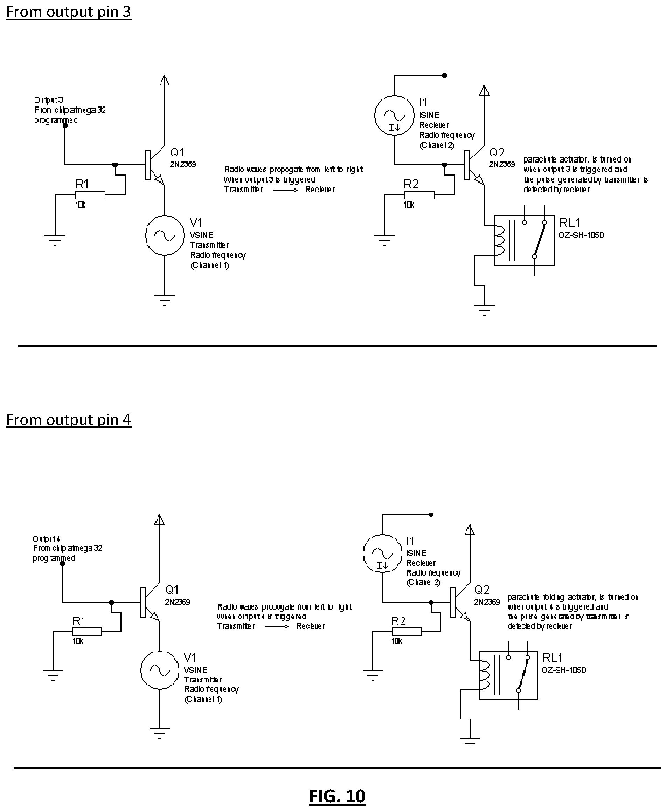

As shown in figures 9 and 10, the output pins described above are wired to the circuits that can transmit the radio frequency which determines the correct command for the corresponding reaction engine. Also the reaction engines inside circuitry will receive the transmitted radio frequency and function accordingly.

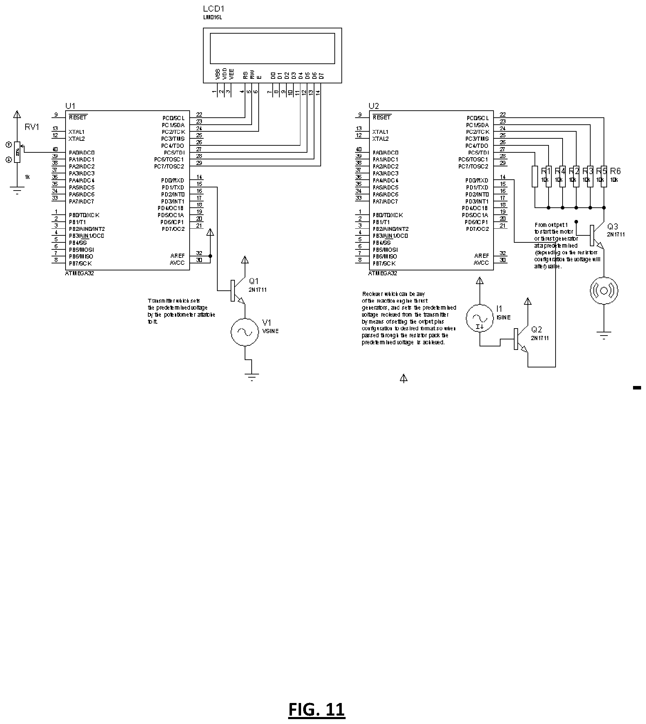

In order to have the privilege of adjusting the thrust force generated by this invention, the force acquired by each reaction engine during acceleration which is the movement of reaction engines along the first straight path of the looped track needs to be adjustable so when the operator (as shown in figure 11) sets the desired force magnitude needed, all reaction engines running at the first straight path of the looped track must have a uniform force applied to them therefore having the same acceleration.

As shown in figure 7 reaction engines will be activated when aligning with sensor 1 which is attached to the starting point of the first straight path of the looped track and start accelerating. Once the reaction engines reach the sensor 2 (as shown in figure 7) which is the end of the first straight path of the looped track, they will be deactivated. During this period all reaction engines must have a uniform predetermined force applied to them and this can be achieved by sending a unique radio frequency to all reaction engines for the purpose of setting their predetermined force magnitude to be uniform during acceleration.

As shown in figure 7 sensor numbers 3 to 10 are attached to the looped track. When the reaction engines arrive at the second straight path of the looped track they need to decelerate and reduce their speed which is done by activating the parachute system. Once the reaction engines pass the sensors attached to the second straight path of the looped track the signal will be sent to the processor and the processor after rendering and calculating the speed of reaction engines will send the corresponding command to activate the parachute system of the reaction engine. When the reaction engine reaches the bottom part of the second straight path where sensor number 10 according to figure 7 is attached to the looped track, the parachute of the corresponding reaction engine will fold back or become deactivated.

Following is an example and analysis of the invention with regards to its fuel efficiency:

Consider a looped track with its first and second straight paths length to be 10 meters and its first and second curved paths to have a diameter of 2 meters.

Consider a reaction engine of jet engine type with the following specifications:

Manufacturer: WILL:BR model FJ44

Weight: 202 Kg

Diameter: 0.5 meters

Length: 1 meter

Thrust force: 8500 Newton

Specific fuel consumption (SFC): 12.89 g/(KN.s) grams per kilo Newton second

**(*Note that specific fuel consumption (SFC) is an index for fuel efficiency*)**

Consider the jet engine having a force of 8500 Newton accelerating along the first straight path of the looped track which is 10 meters in this example.

Since   force = mass * acceleration   therefore the acceleration of the jet engine will be $(8500/202)$ which is 42 m/s$^2$

Since $v^2 = 2.a.s$

Where:

v = velocity of jet engine.

a = acceleration of the jet engine.

s = distance travelled by jet engine which in this example is 10 meters.

Therefore by considering the above formula the jet engine will have a speed of 29 m/s when it travels 10 meter and reaches the top point of the first straight path of the looped track.

Since v = a.t where t is time in seconds therefore it takes 0.69 seconds for the jet engine to travel 10 meters of the first straight path of the looped track.

Since the specific fuel consumption (SFC) of the jet engine used in this example is 12.89 g/(KN.s) and the thrust force of this jet engine is 8500 Newton therefore each of these jet engines used in this example will consume 110 grams of fuel in one second.

Now since the jet engine travels the first straight path of the looped track in 0.69 seconds therefore each jet engine consumes 76 grams of fuel during its acceleration phase.

By considering the diameter of the first curved path of the looped track to be 2 meters and the speed in which the jet engine travels along the first curved part of the looped track as calculated above to be 29 m/s therefore it takes 0.11 second for the jet engine to travel along the first curved part of the looped track.

By considering the time 0.11 seconds that takes for the jet engine to travel through the first curved path of the looped track, it takes 9 jet engines to travel at a continues paste in one second through the first curved path of the looped track.

As mentioned above each jet engine consumes 76 grams of fuel during its acceleration along the first straight path of the looped track therefor to apply a force (centrifugal force) to the looped track in one second 9 jet engines will be utilized and by multiplying 76 grams of fuel consumption with the number of jet engines passing the first curved path of the looped track in one second we obtain a value of 684 grams of fuel consumed in one second by this example for this invention.

By considering the formula centrifugal force = $m.v^2/r$ where m is the mass of each jet engine in Kg and v is the velocity of each jet engine in m/s and r is the radius of the curved path of the looped track in meters, the force that each jet engine exerts on the looped track while travelling through the first curved path of the looped track is calculated to be 169,882 Newton or approximately 170 KN.

Since the force applied to the looped track by the reaction engines travelling through the first curved path of the looped track is sinusoidal therefore the RMS value of this force is derived by the formula $RMS = \frac{1}{\sqrt{2}}$ (Root mean square) and is calculated to be 118,917 Newton or approximately 119 KN.

Since for the deceleration of these jet engines we rely on parachutes therefore fuel is not consumed for that phase where the jet engines travel through the second straight path of the looped track and also since the speed of jet engine's travel during the second curved path of the looped track is relatively low so we ignore any opposite forces and obtain a unidirectional force by this invention.

From the above calculations we were able to achieve 119 KN force in one second by this example for this invention and consumed 684 grams of fuel in one second. The specific fuel consumption (SFC) is therefore calculated to be 5.74 g/(KN.s) or approximately 6 grams per Kilo Newton second.

As can be seen the specific fuel consumption (SFC) of the jet engines used for this example were 12.89 g/(KN.s) which was derived from its manufacturer and this invention generated a thrust force with specific fuel consumption (SFC) of 6 g/(KN.s) which is much less and more fuel efficient.

**Claims**

1.  Apparatus for generating a unidirectional force comprising a first looped track and a plurality of reaction engines, and wherein the first looped track comprises a first straight path, a first curved path, a second straight path, and a second curved path and the reaction engines move along the different paths of the first looped track, wherein said reaction engines are configured to operate according to the following steps a) to d):

    a) each of said plurality of reaction engines in the first looped track is activated and accelerated in the first straight path of the first looped track with a controlled predetermined force magnitude in order to gain kinetic energy and once the said reaction engines reach the end of the first straight path of the first looped track their predetermined force will be deactivated and,
    b) each of said plurality of reaction engines in the first looped track which has gained said kinetic energy will enter the first curved path of the first looped track with a high velocity and travel along this path and exert as a result of the reaction engines movement along the first curved path of the first looped track a unidirectional force to the looped track and,
    c) each of said plurality of reaction engines in the first looped track is decelerated along the second straight path of the first looped track by means of drag forces acting against the reaction engines by activating a parachute system, and once the reaction engines reach the end of the second straight path of the first looped track having a low velocity the parachute system will fold back, and,
    d) each of said plurality of reaction engines in the first looped track will move along the second curved path of the first looped track with a low velocity and will be positioned at the stage at the beginning of step a) again and such that the steps a) to d) are carried out for each of said plurality of reaction engines in the first looped track cyclic such that said plurality of reaction engines travel around the first looped track and accelerate said apparatus;

    wherein a second looped track is fixed to the first looped track back to back and wherein said plurality of reaction engines in the second looped track is configured to operate analogous to steps a) to d) in said second looped track such that those of said plurality of reaction engines running along the first looped track move in an opposite direction than those of said plurality of reaction engines running along said second looped track in order to achieve a combined unidirectional force acting on said apparatus.

2. Apparatus according to claim 1, further comprising wires wound around different sections of each looped track with electrical current flowing through it, and also the said plurality of reaction engines comprise a permanent magnet each therefore the said plurality of reaction engines will be floating air cushioned throughout the different paths of each looped track during run.

3. Apparatus according to any one of the preceding claims, further comprising an automated fuel pumping system at the second curved path of each looped track where the speed of the said plurality of the reaction engines are at their lowest during their afore mentioned cycle according to steps a) to d) and wherein the said plurality of the reaction engines each comprise an automated valve to receive the fuel while moving along the second curved path of each looped track, and then detach from the fuel pumping system and continue their cycle.

4. Apparatus according to any one of the preceding claims, wherein each looped track comprises a ferromagnetic coil of wire which conducts high frequency alternating current to generate an alternating magnetic field along the different paths of the said looped track and wherein each of said plurality of reaction engines further comprises a coil of wire to receive the alternating current induced by the alternating magnetic field, which can then be rectified and transformed to DC current and made available for consumption by electric circuits implemented in each of the said plurality of reaction engines.

5. Apparatus according to any one of the preceding claims, wherein each looped track comprises a number of sensors alongside it such that said plurality of reaction engines moving along the different paths of the looped track pass these sensors that are attached to the looped track, wherein when one of said plurality of reaction engines aligns with any of the sensors attached to the looped track, that sensor then sends a signal to a processing unit, the processing unit will then process the received signal, and wherein a command issued for the corresponding reaction engine to be executed is transmitted by radio waves from the processing unit to the corresponding reaction engine

6. Apparatus according to claim 5, wherein when one of said reaction engines arrives at said second straight path of the lopped track, it passes a sensor attached to the second straight path of the looped track, a signal will be sent to the processing unit and the processing unit after rendering and calculating the speed of said one of said reaction engines will send the corresponding command to activate the parachute system of said one of said reaction engines and, when said one of said reaction engines reaches the end of the second straight path where another sensor is attached to the looped track, the processing unit sends a command to deactivate the parachute system of said corresponding one of said reaction engines.

7. A system according to claim 5, where the sensorsthat are attached to the looped track are wired to input pins of the processing unit, wherein the processing unit also has a number of output pins, such that the processing unit after receiving a signal from the sensors attached to the looped track, and after processing and computing will activate one of the output pins with respect to the calculations and computations executed, such that this activated output pin then generates a predetermined radio frequency or encoded message via a frequency channel for the corresponding reaction engine, wherein for avoidance of interference either different radio frequency for each output pin is generated or a different encoding for each output pin is used for transmitting the correct command to each reaction engine separately and securely.

8. Apparatus according to any one of the preceding claims, wherein in order to adjust the thrust force generated according to an operator's desire a unique radio frequency is used for the purpose of setting the force applied by each of said plurality of reaction engines and their acceleration to be uniform such that all reaction engines running at the first straight path of each looped track have a uniform force magnitude applied to them.

9. Method for generating a unidirectional force on an apparatus comprising a first looped track and a plurality of reaction engines, and wherein the first looped track comprises a first straight path, a first curved path, a second straight path, and a second curved path and wherein the reaction engines in the first looped track move along the different paths of the first looped track with the following steps:

   a) wherein each of said plurality of reaction engines in the first looped track is activated and accelerate in the first straight path of the first looped track with a predetermined force magnitude in order to gain kinetic energy and once the said reaction engines reach the end of the first straight path of the first looped track, their predetermined force will be deactivated and,
   b) wherein each of said plurality of reaction engines which has gained said kinetic energy will enter the first curved path of the first looped track with a high velocity and travel along this path and exert as a result of the reaction engines movement along the first curved path of the first looped track a unidirectional force to the looped track and,

c) wherein each of said plurality of reaction engines is decelerated along the second straight path of the first looped track by means of drag forces acting against the reaction engines by activating a parachute system, and once the reaction engines reach the end of the second straight path of the first looped track having a low velocity the parachute system will fold back, and,

d) wherein each of said plurality of reaction engines will move along the second curved path of the first looped track with a low velocity and will be positioned at the stage at the beginning of step a) again and wherein the steps a) to d) are carried out for each of said plurality of reaction engines cyclic such that said plurality of reaction engines travel around the first looped track and accelerate said apparatus,

wherein a second plurality of reaction engines is operated analogous to steps a) to d) in a second looped track which is fixed to the first looped track back to back and wherein those of said plurality of reaction engines running along the first looped track move in an opposite direction than those of said plurality of reaction engines running along said second looped track in order to achieve a combined unidirectional force acting on said apparatus.

10. Method according to claim 9, wherein when one of said reaction engines arrives at said second straight path of the looped track, it passes a sensor attached to the second straight path of the looped track, a signal will be sent to a processing unit and the processing unit after rendering and calculating the speed of said one of said reaction engines sends a corresponding command to activate the parachute system of said one of said reaction engines, and when said one of said reaction engines reaches the end of the second straight path where another sensor is attached to the looped track, the processing unit sends a command to deactivate the parachute system of said corresponding one of said reaction engines.

## Patentansprüche

1. Vorrichtung zum Erzeugen einer unidirektionalen Kraft, die eine erste Ringbahn und eine Vielzahl von Strahltriebwerken umfasst, und wobei die erste Ringbahn einen ersten geraden Bahnabschnitt, einen ersten gekrümmten Bahnabschnitt, einen zweiten geraden Bahnabschnitt und einen zweiten gekrümmten Bahnabschnitt umfasst und sich die Strahltriebwerke entlang der verschiedenen Bahnabschnitte der ersten Ringbahn bewegen, wobei die Strahltriebwerke so konfiguriert sind, dass sie gemäß den folgenden Schritten a) bis d) arbeiten:

a) jedes der mehreren Strahltriebwerke in der ersten Ringbahn aktiviert und in dem ersten geraden Bahnabschnitt der ersten Ringbahn mit einer gesteuerten vorbestimmten Kraftgröße beschleunigt wird, um kinetische Energie zu gewinnen, und sobald die Strahltriebwerke das Ende des ersten geraden Bahnabschnittes der ersten Ringbahn erreichen, ihre vorbestimmte Kraft deaktiviert wird und,

b) jedes der mehreren Strahltriebwerke in der ersten Ringbahn, das die kinetische Energie gewonnen hat, mit einer hohen Geschwindigkeit in den ersten gekrümmten Bahnabschnitt der ersten Ringbahn eintritt und sich entlang dieses Bahnabschnittes bewegt und als Ergebnis der Bewegung der Strahltriebwerke entlang des ersten gekrümmten Bahnabschnittes der ersten Ringbahn eine unidirektionale Kraft auf die Ringbahn ausübt und,

c) jedes der mehreren Strahltriebwerke in der ersten Ringbahn entlang des zweiten geraden Bahnabschnittes der ersten Ringbahn mit Hilfe von Widerstandskräften abgebremst wird, die auf die Strahltriebwerke wirken, indem ein Fallschirmsystem aktiviert wird, und sobald die Strahltriebwerke das Ende des zweiten geraden Bahnabschnittes der ersten Ringbahn erreichen und eine niedrige Geschwindigkeit haben, das Fallschirmsystem sich zusammenklappt, und,

d) jedes der mehreren Strahltriebwerke in der ersten Ringbahn sich entlang des zweiten gekrümmten Bahnabschnittes der ersten Ringbahn mit einer niedrigen Geschwindigkeit bewegt und wieder an der Stelle wie am Beginn von Schritt a) positioniert wird und zwar so, dass die Schritte a) bis d) für jedes der mehreren Strahltriebwerke in der ersten Ringbahn zyklisch ausgeführt werden, so dass die mehreren Strahltriebwerke um die erste Ringbahn herumfahren und die Vorrichtung beschleunigen;

wobei eine zweite Ringbahn und die erste Ringbahn Rücken an Rücken befestigt sind und wobei die Vielzahl von Strahltriebwerken in der zweiten Ringbahn so konfiguriert ist, dass sie analog zu den Schritten a) bis d) in der zweiten Ringbahn betrieben wird, so dass diejenigen der Vielzahl von Strahltriebwerken, die sich entlang der ersten Ringbahn bewegen, sich in eine entgegengesetzte Richtung bewegen als diejenigen der Vielzahl von Strahltriebwerken, die sich entlang der zweiten Ringbahn bewegen, um eine kombinierte unidirektionale Kraft zu erreichen, die auf der Vorrichtung wirkt.

2. Vorrichtung nach Anspruch 1, die ferner Drähte umfasst, die um verschiedene Abschnitte jeder Ringbahn gewickelt sind und durch die elektrischer Strom fließt, und wobei die mehreren Strahltriebwerke jeweils einen Permanentmagneten umfassen, so dass die mehreren Strahltriebwerke während des Betriebs über die verschiedenen Bahnabschnitte jeder Ringbahn luftgepolstert schweben.

3. Vorrichtung nach einem der vorangehenden Ansprüche, die außerdem Folgendes umfasst:
ein automatisches Kraftstoffpumpsystem an dem zweiten gekrümmten Abschnitt jeder Ringbahn, wo die Geschwindigkeit der mehreren Strahltriebwerke während ihres vorgenannten Zyklus gemäß den Schritten a) bis d) am niedrigsten ist und wobei die Vielzahl der Strahltriebwerke jeweils ein automatisches Ventil zur Aufnahme des Kraftstoffs erhalten, während sie sich entlang des zweiten gekrümmten Bahnabschnittes jeder Ringbahn bewegen, und sich dann von dem Kraftstoffpumpsystem lösen und ihren Zyklus fortsetzen.

4. Vorrichtung nach einem der vorhergehenden Ansprüche, wobei jede Ringbahn eine ferromagnetische Drahtspule umfasst, die Hochfrequenz-Wechselstrom leitet, um ein magnetisches Wechselfeld entlang der verschiedenen Bahnabschnitte der Ringbahn zu erzeugen, und wobei jedes der mehreren Strahltriebwerke ferner eine Drahtspule umfasst, um den durch das magnetische Wechselfeld induzierten Wechselstrom aufzunehmen, der dann gleichgerichtet und in Gleichstrom umgewandelt und für den Verbrauch durch elektrische Schaltungen, die in jedem der mehreren Strahltriebwerken implementiert sind, verfügbar gemacht werden kann.

5. Vorrichtung nach einem der vorhergehenden Ansprüche, wobei jede Ringbahn eine Anzahl von Sensoren entlang dieser aufweist, so dass die Vielzahl von Strahltriebwerken, die sich entlang der verschiedenen Bahnabschnitte der Ringbahn bewegen, diese Sensoren, die an der Ringbahn angebracht sind, passieren, wobei, wenn eine der Vielzahl von Strahltriebwerken sich mit einem der Sensoren, die an der Ringbahn angebracht sind, ausrichtet, dieser Sensor dann ein Signal an eine Verarbeitungseinheit sendet, die Verarbeitungseinheit dann das empfangene Signal verarbeitet, und wobei ein, von dem entsprechenden Strahltriebwerk auszuführender ausgegebener Befehl durch Funkwellen von der Verarbeitungseinheit an das entsprechende Strahltriebwerk übertragen wird.

6. Vorrichtung nach Anspruch 5, wobei, wenn eines der Strahltriebwerke den zweiten geraden Bahnabschnitt der Ringbahn erreicht, dieses einen Sensor passiert, der an dem zweiten geraden Bahnabschnitt der Ringbahn angebracht ist, ein Signal an die Verarbeitungseinheit gesendet wird und die Verarbeitungseinheit nach der Darstellung und Berechnung der Geschwindigkeit des einen der Strahltriebwerke den entsprechenden Befehl zur Aktivierung des Fallschirmsystems des einen der Strahltriebwerke sendet und, wenn das eine der Strahltriebwerke das Ende des zweiten geraden Bahnabschnittes erreicht, wo ein weiterer Sensor an der Ringbahn angebracht ist, die Verarbeitungseinheit einen Befehl zur Deaktivierung des Fallschirmsystems des entsprechenden der Strahltriebwerke sendet.

7. System nach Anspruch 5, wobei die Sensoren, die an der Ringbahn angebracht sind, mit Eingangspins der Verarbeitungseinheit verdrahtet sind, wobei die Verarbeitungseinheit auch eine Anzahl von Ausgangspins aufweist, so dass die Verarbeitungseinheit nach dem Empfang eines Signals von den an der Ringbahn angebrachten Sensoren und nach der Verarbeitung und Berechnung einen der Ausgangspins in Bezug auf die Berechnungen und Errechnungen aktiviert, so dass dieser aktivierte Ausgangspin dann eine vorbestimmte Funkfrequenz oder eine kodierte Nachricht über einen Frequenzkanal für das entsprechende Strahltriebwerk erzeugt, wobei zur Vermeidung von Interferenzen entweder für jeden Ausgangspin eine andere Funkfrequenz erzeugt wird oder eine unterschiedliche Kodierung für jeden Ausgangspin verwendet wird, um den korrekten Befehl an jedes Strahltriebwerk separat und sicher zu übertragen.

8. Vorrichtung nach einem der vorhergehenden Ansprüche, bei der zur Einstellung der erzeugten Schubkraft entsprechend dem Wunsch des Bedieners eine eindeutige Funkfrequenz verwendet wird, um die von jedem der mehreren Strahltriebwerke ausgeübte Kraft und ihre Beschleunigung einheitlich einzustellen, so dass auf alle Strahltriebwerke, die sich auf dem ersten geraden Bahnabschnitt jeder Ringbahn bewegen, eine einheitliche Kraftgröße ausgeübt wird.

9. Verfahren zur Erzeugung einer unidirektionalen Kraft auf eine Vorrichtung, die eine erste Ringbahn und eine Vielzahl von Strahltriebwerken umfasst, und wobei die erste Ringbahn einen ersten geraden Bahnabschnitt, einen ersten gekrümmten Bahnabschnitt, einen zweiten geraden Bahnabschnitt und einen zweiten gekrümmten Bahnabschnitt umfasst und wobei die Strahltriebwerke in der ersten Ringbahn sich entlang der verschiedenen Bahnabschnitte der ersten Ringbahn mit den folgenden Schritten bewegen:

a) wobei jedes der mehreren Strahltriebwerke in der ersten Ringbahn aktiviert wird und auf dem ersten geraden Bahnabschnitt der ersten Ringbahn mit einer vorbestimmten Kraftgröße beschleunigt, um kinetische Energie zu gewinnen, und sobald die Strahltriebwerke das Ende des ersten geraden Bahnabschnittes der ersten Ringbahn erreichen, ihre vorbestimmte Kraft deaktiviert wird und,

b) wobei jedes der mehreren Strahltriebwerke, das die kinetische Energie gewonnen hat, mit einer hohen Geschwindigkeit in den ersten gekrümmten Bahnabschnitt der ersten Ringbahn eintritt und sich entlang dieses Bahnabschnittes bewegt, und als Ergebnis der Bewegung der Strahltriebwerke entlang des ersten gekrümmten Bahnabschnittes der ersten Ringbahn eine unidirektionale Kraft auf die Ringbahn ausgeübt wird und,

c) wobei jedes der mehreren Strahltriebwerke entlang des zweiten geraden Bahnabschnittes der ersten Ringbahn mit Hilfe von Widerstandskräften abgebremst wird, die auf die Strahltriebwerke wirken, indem ein Fallschirmsystem aktiviert wird, und sobald die Strahltriebwerke das Ende des zweiten geraden Bahnabschnittes der ersten Ringbahn mit einer niedrigen Geschwindigkeit erreichen, das Fallschirmsystem sich zusammenklappt, und,

d) wobei sich jedes der mehreren Strahltriebwerke entlang des zweiten gekrümmten Bahnabschnittes der ersten Ringbahn mit einer geringen Geschwindigkeit bewegt und wieder an der Stelle wie am Beginn von Schritt a) positioniert wird und wobei die Schritte a) bis d) für jedes der mehreren Strahltriebwerke zyklisch durchgeführt werden, so dass die mehreren Strahltriebwerke sich um die erste Ringbahn bewegen und die Vorrichtung beschleunigen,

wobei eine zweite Vielzahl von Strahltriebwerken analog zu den Schritten a) bis d) in einer zweiten Ringbahn betrieben wird, die mit der ersten Ringbahn Rücken an Rücken befestigt ist, und wobei diejenigen der mehreren Strahltriebwerke, die entlang der ersten Ringbahn umlaufen, sich in eine entgegengesetzte Richtung zu denjenigen der mehreren der Strahltriebwerke bewegen, die entlang der zweiten Ringbahn umlaufen, um eine kombinierte unidirektionale Kraft zu erreichen, die auf die Vorrichtung wirkt.

10. Verfahren nach Anspruch 9, wobei, wenn eines der Strahltriebwerke den zweiten geraden Bahnabschnitt der Ringbahn erreicht, dieses einen Sensor passiert, der an dem zweiten geraden Bahnabschnitt der Ringbahn angebracht ist, ein Signal an eine Verarbeitungseinheit gesendet wird und die Verarbeitungseinheit nach dem Zurückgeben und Berechnen der Geschwindigkeit des einen der Strahltriebwerke einen entsprechenden Befehl zur Aktivierung des Fallschirmsystems des einen der Strahltriebwerke sendet, und wenn das eine der Strahltriebwerke das Ende des zweiten geraden Bahnabschnittes erreicht, wo ein anderer Sensor an der Ringbahn angebracht ist, sendet die Verarbeitungseinheit einen Befehl zur Deaktivierung des Fallschirmsystems des entsprechenden der Strahltriebwerke.

## Revendications

1. Appareil permettant de générer une force unidirectionnelle comprenant une première piste en boucle et une pluralité de moteurs de réactions, et dans lequel la première piste en boucle comprend un premier chemin rectiligne, un premier chemin incurvé, un second chemin rectiligne et un second chemin incurvé, et les moteurs de réactions se déplacent le long des différents chemins de la première piste en boucle, où lesdits moteurs de réactions sont conçus pour fonctionner selon les étapes a) à d) suivantes :

a) chacun de ladite pluralité de moteurs de réactions dans la première piste en boucle est activé et accéléré dans le premier chemin rectiligne de la première piste en boucle avec une amplitude de force prédéterminée contrôlée afin d'acquérir de l'énergie cinétique et une fois que lesdits moteurs de réactions atteignent l'extrémité du premier chemin rectiligne de la première piste en boucle, leur force prédéterminée sera désactivée, et

b) chacun de ladite pluralité de moteurs de réactions dans la première piste en boucle qui a acquis ladite énergie cinétique entrera dans le premier chemin incurvé de la première piste en boucle avec une vitesse élevée et parcourra le long de ce chemin, et exercera, en tant que résultat du déplacement des moteurs de réactions le long du chemin incurvé de la première piste en boucle, une force unidirectionnelle sur la piste en boucle, et

c) chacun de ladite pluralité de moteurs de réactions dans la première piste en boucle est décéléré le long du second chemin rectiligne de la première piste en boucle au moyen de forces de traînée agissant contre les moteurs de réactions en activant un système de parachute, et une fois que les moteurs de réactions atteignent l'extrémité du second chemin rectiligne de la première piste en boucle, en ayant une faible vitesse, le système de parachute se repliera, et

d) chacun de ladite pluralité de moteurs de réactions dans la première piste en boucle se déplacera le long du second chemin incurvé de la première piste en boucle avec une faible vitesse et sera repositionné au stade du démarrage de l'étape a) et de telle manière que les étapes a) à d) soient effectuées de manière cyclique pour chacun de ladite pluralité des moteurs de réactions dans la première piste en boucle de sorte que ladite pluralité de moteurs de réactions voyage autour de la première piste en boucle et accélère ledit appareil ;

dans lequel une seconde piste en boucle est fixée à la première piste en boucle, dos à dos, et dans lequel ladite pluralité de moteurs de réactions dans la seconde piste en boucle est conçue pour fonctionner de manière analogue aux étapes a) à d) dans ladite seconde piste en boucle de sorte que les moteurs de réactions de ladite pluralité de moteurs de réactions se déplaçant le long de la première piste en boucle se déplacent dans une direction opposée que ceux de ladite pluralité de moteurs de réactions roulant de long de ladite seconde piste en boucle afin d'arriver à avoir une force unidirectionnelle combinée agissant sur ledit appareil.

2. Appareil selon la revendication 1, comprenant en outre des câbles enroulés autour de différents segments de chaque piste en boucle avec un courant électrique les traversant, et également les moteurs de réactions de ladite pluralité comprennent chacun un aimant permanent, par conséquent ladite pluralité de moteurs de réactions flottera sur un coussin d'air tout au long des différents chemins de chaque piste en boucle durant le fonctionnement.

3. Appareil selon l'une quelconque des revendications précédentes, comprenant en outre un système de pompage de carburant automatisé au niveau du second chemin incurvé de chaque piste en boucle où la vitesse de ladite pluralité des moteurs de réactions est à son plus bas niveau pendant leur cycle mentionné précédemment selon les étapes a) à d) et dans lequel les moteurs de réactions de ladite pluralité comprennent chacun une vanne automatique pour recevoir le carburant tout en se déplaçant le long du second chemin incurvé de chaque piste en boucle, et ensuite se détachent du système de pompage de carburant et continuent leur cycle.

4. Appareil selon l'une quelconque des revendications précédentes, dans lequel chaque piste en boucle comprend une bobine ferromagnétique qui conduit un courant alternatif de haute fréquence pour générer un champ magnétique alternatif le long des différents chemins de ladite piste en boucle et dans lequel chacun de ladite pluralité de moteurs de réactions comprend en outre une bobine de fil pour recevoir le courant alternatif induit par le champ magnétique alternatif, qui peut alors être rectifié et transformé en courant continu et rendu disponible pour la consommation par des circuits électriques mis en œuvre dans chacun de ladite pluralité de moteurs de réactions.

5. Appareil selon l'une quelconque des revendications précédentes, dans lequel chaque piste en boucle comprend un nombre de capteurs à côté d'elle, de sorte que ladite pluralité de moteurs de réactions se déplaçant le long des différents chemins de la piste en boucle passe par ces capteurs qui sont attachés à la piste en boucle, où, lorsqu'un de ladite pluralité de moteurs de réactions s'aligne avec l'un quelconque des capteurs attachés à la piste en boucle, ce capteur envoie alors un signal à une unité de traitement, l'unité de traitement traitera ensuite le signal reçu et dans lequel une commande issue pour le moteur de réaction correspondant devant être exécutée est transmise par des ondes radio à partir de l'unité de traitement vers le moteur de réaction correspondant.

6. Appareil selon la revendication 5, dans lequel lorsqu'un desdits moteurs de réactions arrive audit second chemin rectiligne de la piste en boucle, il passe par un capteur attaché au second chemin rectiligne de la piste en boucle, un signal sera envoyé à l'unité de traitement, et l'unité de traitement, après l'interprétation et le calcul de la vitesse dudit moteur parmi les moteurs de réactions enverra la commande correspondante pour activer le système de parachute dudit moteur parmi les moteurs de réactions, et lorsque ledit moteur parmi les moteurs de réaction atteint l'extrémité du second chemin rectiligne où un autre capteur est attaché à la piste en boucle, l'unité de traitement envoie une commande pour désactiver le système de parachute dudit moteur correspondant parmi lesdits moteurs de réactions.

7. Système selon la revendication 5, où les capteurs qui sont attachés à la piste en boucle, sont des broches d'entrée câblées de l'unité de traitement, où l'unité de traitement possède également un nombre de broches de sortie de sorte que l'unité de traitement, après la réception d'un signal à partir des capteurs attachés sur la piste en boucle et après le traitement et le calcul, activera une des broches de sortie en fonction des calculs et des calculs informatiques exécutés, de sorte que cette broche de sortie activée génère alors une fréquence radio prédéterminée ou un message codé par le biais d'un canal de fréquence pour le moteur de réaction correspondant, où pour éviter des interférences, chaque fréquence radio différente pour chaque broche de sortie est générée ou un codage différent pour chaque broche de sortie est utilisé pour transmettre séparément et en sécurité la commande correcte à chaque moteur de réaction.

8. Appareil selon l'une quelconque des revendications précédentes, dans lequel, afin de régler la force de traînée générée selon un désir d'un opérateur, une fréquence radio unique est utilisée dans l'objectif de régler la force appliquée par chacun de ladite pluralité des moteurs de réactions et rendre leur accélération uniforme de sorte que tous les moteurs de réactions parcourant le premier chemin rectiligne de chaque piste en boucle ont une amplitude de force uniforme.

9. Procédé permettant de générer une force unidirectionnelle sur un appareil comprenant une première piste en boucle et une pluralité de moteurs de réactions, et dans lequel la première piste en boucle comprend un premier chemin rectiligne, un premier chemin incurvé, un second chemin rectiligne et un second chemin incurvé, et dans lequel les moteurs de réactions dans la première piste en boucle se déplacent le long des différents chemins de la première piste en boucle, selon les étapes suivantes :

a) dans lequel chacun de ladite pluralité des moteurs de réactions dans la première piste en boucle est activé et accéléré dans le premier chemin rectiligne de la première piste en boucle avec une amplitude de force prédéterminée afin d'acquérir de l'énergie cinétique et une fois que lesdits moteurs de réactions atteignent l'extrémité du premier chemin rectiligne de la première piste en boucle, leur force prédéterminée sera désactivée, et

b) dans lequel chacun de ladite pluralité des moteurs de réactions dans la première piste en boucle qui a acquis ladite énergie cinétique entrera dans le premier chemin incurvé de la première piste en boucle avec une vitesse élevée et parcourra le long de ce chemin, et exercera, en tant que résultat du déplacement des moteurs de réactions le long du chemin incurvé de la première piste en boucle, une force unidirectionnelle sur la piste en boucle, et

c) dans lequel chacun de ladite pluralité des moteurs de réactions est décéléré le long du second chemin rectiligne de la première piste en boucle au moyen de forces de traînée agissant contre les moteurs de réactions en activant un système de parachute, et une fois que les moteurs de réactions atteignent l'extrémité du second chemin rectiligne de la première piste en boucle en ayant une faible vitesse, le système de parachute se repliera, et

d) dans lequel chacun de ladite pluralité des moteurs de réactions se déplacera le long du second chemin incurvé de la première piste en boucle avec une faible vitesse et sera repositionné au stade du démarrage de l'étape a) et dans lequel les étapes a) à d) sont effectuées de manière cyclique pour chacun de ladite pluralité des moteurs de réactions de sorte que ladite pluralité de moteurs de réactions voyage autour de la première piste en boucle et accélère ledit appareil ;

dans lequel une seconde pluralité de moteurs de réactions est soumise de manière analogue aux étapes a) à d) dans une seconde piste en boucle qui est fixée à la première piste en boucle, dos à dos, et dans lequel les moteurs de ladite pluralité de moteurs de réactions parcourant la première piste en boucle se déplacent dans une direction opposée que ceux de ladite pluralité de moteurs de réactions parcourant ladite seconde piste en boucle afin d'atteindre une force unidirectionnelle combinée agissant sur ledit appareil.

10. Procédé selon la revendication 9, dans lequel, lorsqu'un desdits moteurs de réactions arrive audit second chemin rectiligne de la piste en boucle, il passe par un capteur attaché au second chemin rectiligne de la piste en boucle, un signal sera envoyé à une unité de traitement, et l'unité de traitement, après l'interprétation et le calcul de la vitesse dudit un parmi lesdits moteurs de réactions envoie une commande correspondante pour activer le système de parachute dudit un parmi lesdits moteurs de réaction et lorsque ledit un parmi lesdits moteurs de réactions atteint l'extrémité du second chemin rectiligne où un autre capteur est attaché à la piste en boucle, l'unité de traitement envoie une commande pour désactiver le système de parachute dudit moteur correspondant parmi lesdits moteurs de réactions.

**FIG. 1**

**FIG.2**

**FIG. 3**

**FIG. 4**

**FIG. 5**

**FIG. 6**

**FIG. 7**

**FIG. 8**

From output pin 1

From output pin 2

**FIG. 9**

## From output pin 3

## From output pin 4

**FIG. 10**

**FIG. 11**

**FIG. 12**

**EP 3 565 971 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8272283 B2